# EUROPÄISCHE PATENTSCHRIFT

(11) **EP 2 711 214 B1**
(45) Veröffentlichungstag und Bekanntmachung des Hinweises auf die Patenterteilung: **09.03.2016**
(21) Anmeldenummer: 13184340.1
(22) Anmeldetag: 13.09.2013
(51) Int. Cl.: B60G 7/00, F16F 7/12, B62D 7/20, F16C 7/02

(54) **Lenker für eine Radaufhängung eines Kraftfahrzeugs**
Arm for a wheel suspension in a motor vehicle
Bras pour une suspension de roue d'un véhicule automobile

(30) Priorität: 20.09.2012 DE 102012018553
(43) Veröffentlichungstag der Anmeldung: 26.03.2014
(73) Patentinhaber: AUDI AG, 85045 Ingolstadt (DE)
(72) Erfinder: Schindler, Sebastian, 85049 Ingolstadt (DE); Fessel, Guido, 85049 Ingolstadt (DE)

(56) Entgegenhaltungen:
- WO-A1-99/09563
- DE-A1- 19 911 121
- DE-A1- 19 931 079
- DE-A1-102007 033 763
- DE-C1- 19 542 496
- JP-A- H11 270 607

## Beschreibung

Die Erfindung betrifft einen Lenker für eine Radaufhängung eines Kraftfahrzeugs gemäß der im Oberbegriff des Patentanspruches 1 angegebenen Art.

Derartige Lenker für eine Radaufhängung eines Kraftfahrzeugs werden beispielsweise als Längs- oder Querlenker eingesetzt und weisen eine Lenkerbasis sowie mindestens zwei endseitig angeordnete Lagerstellen auf. Um eine ausreichende Tragfähigkeit zu gewährleisten, sind derartige Lenker in der Regel aus Metall gefertigt. Zudem zeigt ein aus Metall hergestellter Lenker im Schadensfall eine Verbiegung bzw. Verformung, die eine für den Fahrer spürbare verstellte Spur- oder Sturzeinstellung bedingt, wobei auch im verformten Zustand eine Weiterfahrt des Kraftfahrzeugs, z.B. zum Werkstattbesuch, gewährleistet ist. Ein derartiger Lenker ist beispielsweise in der DE 199 31 079 A1 offenbart.

Es ist weiterhin bekannt zur Gewichtsoptimierung die Lenkerbasis anstelle aus Metall aus Faserverbundkunststoff zu fertigen. Als nachteilig erweist sich hierbei jedoch, dass Faserverbundkunststoffe bei Überschreiten einer Maximalkraft in der Regel zu Sprödbruch neigen. D.h. im Schadensfall ist aufgrund des Sprödbruches des Lenkers eine weitere, eingeschränkte Funktionsfähigkeit des Lenkers nicht mehr gewährleistet.

Aus der Offenbarung der DE 10 2007 033 763 A1 ist ein Hybridlenker aus dünnem aber hochfestem Blech bekannt, wobei das Blech mit glasfaserverstärktem Kunststoff umspritzt ist. Diese Konstruktion zeichnet sich insbesondere dadurch aus, dass aufgrund der Blechkonstruktion im Schadensfall der Lenker eingeschränkt funktionsfähig verbleibt. Als nachteilig erweist sich jedoch, dass aufgrund der Lenker aufgrund der Basiskonstruktion aus Blech weiterhin ein relativ hohes Bauteilgewicht aufweist.

Die DE 195 42 496 C2 offenbart eine Vorderradaufhängung für Kraftfahrzeuge, bei der die hintere Lenkerstrebe oberhalb einer vorgegebenen Druckbelastungsgrenze energieabsorbierend längsverformbar ausgebildet ist.

Der Erfindung liegt die Aufgabe zugrunde, einen Lenker für eine Radaufhängung eines Kraftfahrzeugs gemäß der im Oberbegriff des Patentanspruches 1 angegebenen Art derart weiterzubilden, dass im Schadensfall eine eingeschränkte Funktionsfähigkeit des Lenkers gewährleistet ist und der Lenker ein reduziertes Bauteilgewicht aufweist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst der Lenker für eine Radaufhängung eines Kraftfahrzeugs mindestens eine radseitige Lagerstelle und mindestens eine aufbauseitige Lagerstelle sowie eine sich zwischen radseitiger Lagerstelle und aufbauseitiger Lagerstelle erstreckende Lenkerbasis. Zudem ist in bekannter Art und Weise die Lenkerbasis aus Faserverbundkunststoff ausgebildet, und weist eine Einlage aus einem duktilen Material auf.

Erfindungsgemäß weist die Lenkerbasis eine Einschnürung auf und die Einlage ist ausschließlich im Bereich der Einschnürung angeordnet. Hierbei sind die Einschnürung und die Einlage derart ausgebildet und dimensioniert, dass bei Überschreiten einer vorgegebenen Maximalkraft die Lenkerbasis im Bereich der Einschnürung versagt und die Einlage sich plastisch verformt.

Durch die erfindungsgemäße Ausgestaltung des Lenkers für eine Radaufhängung eines Kraftfahrzeugs ist nunmehr in vorteilhafter Weise sichergestellt, dass der Lenker ein geringes Bauteilgewicht aufweist, da die Einlage lediglich lokal begrenzt innerhalb des Lenkers angeordnet ist. Zudem ist aufgrund der erfindungsgemäßen Anordnung und Dimensionierung von Einschnürung und Einlage sichergestellt, dass im Schadensfall, d.h. bei Überschreiten der vorgegebenen Maximalkraft, ein definiertes Versagen des Lenkers im Bereich der Einschnürung und eine plastische Verformung der Einlage auftritt. Als Folge davon ist nach einem Schadensfall für den Fahrer des Kraftfahrzeugs aufgrund der spürbar geänderten Fahreigenschaften erkennbar, dass ein Werkstattaufenthalt notwendig ist, wobei der Fahrer jedoch weiterhin in der Lage ist, selbstständig eine Werkstatt anzufahren.

Gemäß einer ersten Ausführungsform der Erfindung ist die Einlage in Form zweier offener Kugelhalbschalen, die im Mittelbereich ihrer konvexen, gegeneinander gerichteten Außenseiten durch ein Verbindungselement miteinander verbunden sind, ausgebildet. Diese Ausführungsform wird nachfolgend vereinfacht auch als Diabolo bezeichnet und zeichnet sich dadurch aus, dass aufgrund der Verjüngung des Diabolos in der Mitte bei Aufbringen der vorgegebenen Maximalkraft eine Spannungsspitze entsteht, die ein Knicken an der gewünschten Stelle hervorruft. Durch die Fertigung des Diabolos aus einem duktilen Material/Werkstoff, übernimmt das Diabolo zudem die Funktion des gezielten plastischen Verformens.

Vorzugsweise ist hierbei die Lenkerbasis als Hohlkörper ausgebildet und weist eine innere Lage eines ersten Faserverbundkunststoffes mit einer im Wesentlichen in Längsrichtung des Lenkers ausgerichteten Faseranordnung und eine äußere Lage eines zweiten Faserverbundkunststoffes mit einer im Wesentlichen quer zur Längsrichtung des Lenkers ausgerichteten Faseranordnung auf. Die im Innern der Lenkerbasis angeordnete Einlage in Form eines Diabolos ist vollständig von der inneren Lage umwickelt. Durch die im Wesentlichen in Längsrichtung des Lenkers ausgerichteten Faseranordnung des ersten Faserverbundkunststoffes ist eine ausreichende Kraftübertragung in die Zug-/Druckrichtung des Lenkers gewährleistet, während die im Wesentlichen quer zur Längsrichtung des Lenkers ausgerichtete Faseranordnung des zweiten Faserverbundkunststoffes ein Ausknicken des Lenkers im Nicht-Knickbereich des Lenkers verhindern.

Gemäß einer anderen Ausführungsform der Erfindung ist die Einlage in Form einer Drahtstruktur ausgebildet. Diese Ausgestaltung erweist sich aufgrund des geringen Bauteilgewichts der Drahtstruktur als besonders vorteilhaft.

Auch bei der Ausführungsform "Drahtstruktur" ist die Lenkerbasis vorzugsweise als Hohlkörper ausgebildet und weist eine innere Lage eines ersten Faserverbundkunststoffes mit einer im Wesentlichen in Längsrichtung des Lenkers ausgerichteten Faseranordnung und eine äußere Lage eines zweiten Faserverbundkunststoffes mit einer im Wesentlichen quer zur Längsrichtung des Lenkers ausgerichteten Faseranordnung auf. Die Drahtstruktur ist hierbei zwischen der inneren und der äußeren Lage angeordnet. Die bereits bei der Ausführungsform "Diabolo" ausgeführten Vorteile der Faserausrichtung von innerer und äußere Lage gelten sinngemäß auf für die Ausführungsform "Drahtstruktur"

Vorzugsweise weist die innere Lage des ersten Faserverbundkunststoffes eine Lagenorientierung von 0° bis 15° und die äußere Lage des zweiten Faserverbundkunststoffes eine Lagenorientierung von 90° bis 85° auf.

Vorzugsweise handelt es sich bei dem ersten Faserverbundkunststoff der inneren Lage um einen kohlenstofffaserverstärkten Kunststoff (CFK), glasfaserverstärken Kunststoff (GFK) oder aramidfaserverstärkten Kunststoff (AFK). Die äußere Lage ist vorzugsweise aus einem sogenannten Abreißgewebe oder aus eine kohlenstofffaserverstärkten Kunststoff (CFK), glasfaserverstärken Kunststoff (GFK) oder aramidfaserverstärkten Kunststoff (AFK) ausgebildet. Insbesondere die Verwendung eines glasfaserverstärkten Kunststoff als äußere Lage erweist sich als vorteilhaft, da die GFK-Lage aufgrund des niedrigen E-moduls eine hohe Eigendämpfung aufweist und zudem die GFK-Lage auf eine äußere Beschädigung, z.B. durch einen Steinschlag, eine Weißverfärbung der Oberfläche zeigt. Dies ist um Kundendienst durch einfache Inaugenscheinnahme leicht feststellbar und ermöglicht gegebenenfalls einen schnellen prophylaktischen Austausch.

Vorzugsweise ist die Einlage aus einem duktilen Material mit hoher Bruchdehnung, insbesondere aus Stahl, Aluminiumwerkstoff oder Titanwerkstoff ausgebildet.

Zur weiteren Gewichtsreduzierung sind die radseitige und die aufbauseitige Lagerstelle aus einem Aluminium-, oder Titanwerkstoff oder aus einem faserverstärkten Kunststoff ausgebildet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Schnittdarstellung einer ersten Ausführungsform eines erfindungsgemäßen Lenkers, und
- Fig. 2: eine Schnittdarstellung einer zweiten Ausführungsform eines erfindungsgemäßen Lenkers.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

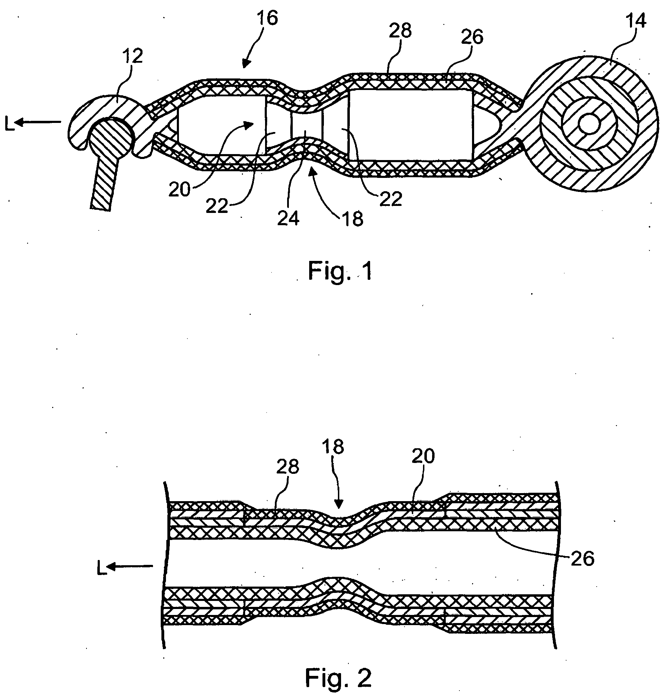

Fig. 1 zeigt einen insgesamt mit der Bezugsziffer 10 bezeichneten Lenker für eine Radaufhängung eines Kraftfahrzeugs.

Der Lenker 10 umfasst eine radseitige Lagerstelle 12 sowie eine aufbauseitige Lagerstelle 14 und einen zwischen den beiden Lagerstellen 12, 14 sich erstreckende Lenkerbasis 16. Vorliegend ist die Lenkerbasis 16 aus Faserverbundkunststoff die beiden Lagerstellen 12, 14 sind aus einem Aluminiumwerkstoff hergestellt.

Wie Fig. 1 zu entnehmen ist, ist die Lenkerbasis 16 als ein Hohlkörper ausgebildet und weist eine Einschnürung 18 auf. Zudem ist im Innern der Lenkerbasis 16 im Bereich der Einschnürung 18 eine Einlage 20 aus hochfesten duktilem Stahl angeordnet. Die Einlage 20, nachfolgend aufgrund ihrer Formgebung vereinfacht als Diabolo bezeichnet, weist zwei offene Kugelhalbschalen 22 auf, die im Mittelbereich ihrer konvexen, gegeneinander gerichteten Außenseiten über ein Verbindungselement 24 miteinander verbunden sind.

Die Einlage 20 bzw. das Diabolo 20 ist im Innern der Lenkerbasis 16 angeordnet. Die Außenseite des Diabolos 20 ist hierbei vollständig von einer inneren Lage 26 aus einem kohlenstofffaserverstärkten Kunststoff (CFK) umwickelt und die innere Lage 26 ist ihrerseits an ihrem äußeren Umfang vollständig von einer äußeren Lage 28 aus einem glasfaserverstärkten Kunststoff (GFK) umfasst.

Um eine ausreichende Kraftübertragung in Längsrichtung des Lenkers (L), d.h. Zug- und Druckbeanspruchung, zu gewährleisten, weist die innere CFK-Lage 26 eine Lagenorientierung von ca. 0° bis 15° auf. Die äußere GFK-Lage 28, die ein Ausknicken des Lenkers 10 außerhalb der Einschnürung 18 verhindern soll, weist eine Lagenorientierung von ca. 90° bis 85° auf.

Die Funktion ist folgende:
Einschnürung 18 und das Diabolo 20 sind so dimensioniert und ausgebildet, dass bei Überschreiten einer vorher definierten Maximalkraft bzw. Missbrauchslast, im Bereich der Einschnürung 18 ein Knicken des Lenkers 10 auftritt. Das im Bereich der Einschnürung angeordnete Diabolo 20 erfährt in diesem Fall eine plastische Verformung, die vom Fahrer aufgrund der nunmehr spürbaren Sturz- oder Spureinstellung deutlich wahrnehmbar ist, wobei aufgrund des Diabolos 20 ein Sprödbruch des Lenkers 10 verhindert wird, d.h. dass trotz des Missbrauchsfalles eine Weiterfahrt möglich ist.

Fig. 2 zeigt eine andere Ausführungsform des Lenkers 10 10. Aus Gründen der Übersichtlichkeit ist lediglich ein Ausschnitt der Lenkerbasis 16 dargestellt.

Entsprechend zu der Ausführungsform gemäß Fig. 1, weist der Lenker 10 bzw. die Lenkerbasis 16 auch bei der Ausführungsform gemäß Fig. 2 eine Einschnürung 18 auf. Die Einschnürung 18 legt wiederum den Bereich des Lenkers 10 fest, in dem im Missbrauchsfalle ein definiertes Versagen der Lenkerbasis 16 auftraten soll.

Im Gegensatz zu der Ausführungsform gemäß Fig. 1, ist die Einlage 20 anstelle in Form einer Drahtstruktur ausgebildet, die zwischen der inneren CFK-Lage 26 und der äußeren GFK-Lage 28 einlaminiert ist.

### Bezugszeichenliste

- 10: Lenker
- 12: radseitige Lagerstelle
- 14: aufbauseitige Lagerstelle
- 16: Lenkerbasis
- 18: Einschnürung
- 20: Einlage
- 22: Kugelhalbschalen
- 24: Verbindungselement
- 26: innere Lage
- 28: äußere Lage

- L: Längsrichtung
- CFK: kohlenstofffaserverstärkter Kunststoff
- GFK: glasfaserverstärkter Kunststoff
- AFK: aramidfaserverstärkter Kunststoff

## Patentansprüche

1. Lenker (10) für eine Radaufhängung eines Kraftfahrzeugs, umfassend
- mindestens eine radseitige Lagerstelle (12);
- mindestens eine aufbauseitige Lagerstelle (14), sowie
- eine sich zwischen den beiden Lagerstellen (12, 14) erstreckende Lenkerbasis (16),
wobei die Lenkerbasis (16) aus Faserverbundkunststoff ausgebildet ist und eine Einlage (20) aus einem duktilen Material aufweist, **dadurch gekennzeichnet, dass** die Lenkerbasis (16) eine Einschnürung (18) aufweist und die Einlage (20) ausschließlich im Bereich der Einschnürung (18) angeordnet ist, wobei die Einschnürung (18) und die Einlage (20) derart ausgebildet und dimensioniert sind, dass bei Überschreiten einer vorgegebenen Maximalkraft die Lenkerbasis (16) im Bereich der Einschnürung (18) versagt und die Einlage (20) sich plastisch verformt.

2. Lenker nach Anspruch 1, **dadurch gekennzeichnet, dass** die Einlage (20) in Form zweier offener Kugelhalbschalen (22), die im Mittelbereich ihrer konvexen, gegeneinander gerichteten Außenseiten durch ein Verbindungselement (24) miteinander verbunden sind, ausgebildet ist.

3. Lenker nach Anspruch 2, **dadurch gekennzeichnet, dass** die Lenkerbasis (16) als Hohlkörper ausgebildet ist und eine innere Lage (26) eines ersten Faserverbundkunststoffes mit einer im Wesentlichen in Längsrichtung (L) des Lenkers (10) ausgerichteter Faseranordnung und eine äußere Lage (28) eines zweiten Faserverbundkunststoffes mit einer im Wesentlichen quer zur Längsrichtung (L) des Lenkers (10) ausgerichteten Faseranordnung aufweist, wobei die Einlage (20) von der die inneren Lage (26) umwickelt ist.

4. Lenker nach Anspruch 1, **dadurch gekennzeichnet, dass** die Einlage (20) in Form einer Drahtstruktur ausgebildet ist.

5. Lenker nach Anspruch 4, **dadurch gekennzeichnet**, die Lenkerbasis (16) als Hohlkörper ausgebildet ist und eine innere Lage (26) eines ersten Faserverbundkunststoffes mit einer im Wesentlichen in Längsrichtung (L) des Lenkers (10) ausgerichteter Faseranordnung und eine äußere Lage (28) eines zweiten Faserverbundkunststoffes mit einer im Wesentlichen quer zur Längsrichtung (L) des Lenkers (10) ausgerichteten Faseranordnung aufweist, wobei die Einlage (20) zwischen der inneren und der äußeren Lage (26, 28) angeordnet ist.

6. Lenkerbasis nach Anspruch 3 oder 5, **dadurch gekennzeichnet, dass** die innere Lage (26) des ersten Faserverbundkunststoffes eine Lagenorientierung von 0°-15° und die äußere Lage (28) des zweiten Faserverbundkunststoffes eine Lagenorientierung von 90°-85° aufweist.

7. Lenker (10) nach einem der Ansprüche 3, 5 oder 6, **dadurch gekennzeichnet, dass** es sich bei dem ersten Faserverbundkunststoff inneren Lage (26) um einen faserverstärkten Kunststoff, insbesondere Carbonfaser (CFK), Glasfaser (GFK)oder Aramidfaser (AFK) handelt und die äußeren Lage (28) als ein Abreißgewebe oder aus einem faserverstärkten Kunststoff, insbesondere Carbonfaser (CFK), Glasfaser (GFK), oder Aramidfaser (AFK) ausgebildet ist.

8. Lenker (10) nach einem der vorgenannten Ansprüche, **dadurch gekennzeichnet, dass** die Einlage (20) aus einem duktilen Material mit hoher Bruchdehnung, insbesondere aus Stahl, aus einem Aluminiumwerkstoff oder Titanwerkstoff ausgebildet ist.

9. Lenker nach einem der vorgenannten Ansprüche, **dadurch gekennzeichnet, dass** die radseitige und aufbauseitige Lagerstelle (12, 14) aus Metall, insbesondere Stahl, Aluminium oder Titan, oder aus einem faserverstärkten Kunststoff ausgebildet sind.

## Claims

1. Suspension link (10) for a wheel suspension of a motor vehicle, comprising
- at least one wheel-side bearing position (12),
- at least one body-side bearing position (14), and
- a suspension-link base (16) which extends between the two bearing positions (12, 14),
the suspension-link base (16) being made of fibre-composite plastics material and comprising an insert (20) made of a ductile material, **characterised in that** the suspension-link base (16) has a narrowed portion (18) and the insert (20) is arranged exclusively in the region of the narrowed portion (18), the narrowed portion (18) and the insert (20) being designed and dimensioned such that when a predefined maximum force is exceeded, the suspension-link base (16) fails in the region of the narrowed portion (18) and the insert (20) plastically deforms.

2. Suspension link according to claim 1, **characterised in that** the insert (20) is in the form of two open spherical half-shells (22) which are interconnected in the central region of the convex outer sides thereof, which face each other, by a connecting element (24).

3. Suspension link according to claim 2, **characterised in that** the suspension-link base (16) is designed as a hollow body and comprises an inner layer (26) of a first fibre-composite plastics material having a fibre arrangement which is oriented substantially in the longitudinal direction (L) of the suspension link (10) and an outer layer (28) of a second fibre-composite plastics material having a fibre arrangement which is oriented substantially transversely to the longitudinal direction (L) of the suspension link (10), the insert (20) being wrapped in the inner layer (26).

4. Suspension link according to claim 1, **characterised in that** the insert (20) is in the form of a wire structure.

5. Suspension link according to claim 4, **characterised in that** the suspension-link base (16) is designed as a hollow body and comprises an inner layer (26) of a first fibre-composite plastics material having a fibre arrangement which is oriented substantially in the longitudinal direction (L) of the suspension link (10) and an outer layer (28) of a second fibre-composite plastics material having a fibre arrangement which is oriented substantially transversely to the longitudinal direction (L) of the suspension link (10), the insert (20) being arranged between the inner and the outer layer (26, 28).

6. Suspension-link base according to either claim 3 or claim 5, **characterised in that** the inner layer (26) of the first fibre-composite plastics material has a layer orientation of 0°-15° and the outer layer (28) of the second fibre-composite plastics material has a layer orientation of 90°-85°.

7. Suspension link (10) according to any of claims 3, 5 or 6, **characterised in that** the first, inner layer (26) of fibre-composite plastics material is a fibre-reinforced plastics material, in particular carbon fibre (CFRP), glass fibre (GFRP) or aramid fibre (AFRP), and the outer layer (28) is designed as a peel ply or is made of a fibre-reinforced plastics material, in particular carbon fibre (CFRP), glass fibre (GFRP) or aramid fibre (AFRP).

8. Suspension link (10) according to any of the preceding claims, **characterised in that** the insert (20) is made of a ductile material having a high ductile yield, and is in particular made of steel, an aluminium material or a titanium material.

9. Suspension link according to any of the preceding claims, **characterised in that** the wheel-side and the body-side bearing positions (12, 14) are made of metal, in particular steel, aluminium or titanium, or of a fibre-reinforced plastics material.

## Revendications

1. Bras de suspension (10) pour une suspension de roue d'un véhicule automobile, comprenant :
- au moins un point d'appui côté roue (12) ;
- au moins un point d'appui côté structure (14) ainsi que :
- une base (16) du bras s'étendant entre les deux points d'appui (12, 14), dans lequel la base (16) du bras est constituée d'une matière plastique composite fibreuse et présente une garniture (20) formée d'un matériau ductile, **caractérisé en ce que** la base (16) du bras présente un étranglement (18) et la garniture (20) est agencée exclusivement dans la zone de l'étranglement (18), dans lequel l'étranglement (18) et la garniture (20) sont conformés et dimensionnés de sorte que, lors du dépassement d'une force maximale prédéterminée, la base (16) du bras s'affaisse dans la zone de l'étranglement (18) et que la garniture (20) présente une déformation plastique.

2. Bras de suspension selon la revendication 1, **caractérisé en ce que** la garniture (20) se présente sous la forme de deux demi-coques sphériques (22), qui sont reliées l'une à l'autre dans la zone centrale de leurs côtés externes convexes disposés l'un en face de l'autre par un élément de liaison (24).

3. Bras de suspension selon la revendication 2, **caractérisé en ce que** la base (16) du bras se présente sous la forme d'un corps creux et présente une couche interne (26) d'une première matière plastique composite fibreuse avec un aménagement des fibres orienté sensiblement dans la direction longitudinale (L) du bras de suspension (10) et une couche externe (28) d'une seconde matière plastique composite fibreuse avec un aménagement des fibres orienté sensiblement transversalement à la direction longitudinale (L) du bras de suspension (10), dans lequel la garniture (20) est entourée par celle de la couche interne (26).

4. Bras de suspension selon la revendication 1, **caractérisé en ce que** la garniture (20) se présente sous la forme d'une structure de fil.

5. Bras de suspension selon la revendication 4, **caractérisé en ce que** la base (16) du bras de suspension se présente sous la forme d'un corps creux et présente une couche interne (26) d'une première matière plastique composite fibreuse avec un aménagement des fibres orienté sensiblement dans la direction longitudinale (L) du bras de suspension (10) et une couche externe (28) d'une seconde matière plastique composite fibreuse avec un aménagement des fibres orienté sensiblement transversalement à la direction longitudinale (L) du bras de suspension (10), dans lequel la garniture (20) est aménagée entre la couche interne et la couche externe (26, 28).

6. Base de bras de suspension selon la revendication 3 ou la revendication 5, **caractérisé en ce que** la couche interne (26) de la première matière plastique composite fibreuse présente une orientation de couche de 0 à 15° et la couche externe (28) de la seconde matière plastique composite fibreuse présente une orientation de couche de 90 à 85°.

7. Bras de suspension (10) selon l'une quelconque des revendications 3, 5 ou 6, **caractérisé en ce que**, la première matière plastique composite fibreuse de la couche interne (26) est une matière plastique renforcée par des fibres, en particulier des fibres de carbone (CFK), des fibres de verre (GFK) ou des fibres d'aramide (AFK) et la couche externe (28) se présente sous la forme d'un tissu déchirable ou d'une matière plastique renforcée par des fibres, en particulier des fibres de carbone (CFK), des fibres de verre (GFK) ou des fibres d'aramide (AFK).

8. Bras de suspension (10) selon l'une quelconque des revendications précédentes, **caractérisé en ce que** la garniture (20) se présente sous la forme d'un matériau ductile avec un allongement à la rupture élevé, en particulier en acier, en matériau à base d'aluminium ou en matériau à base de titane.

9. Bras de suspension selon l'une quelconque des revendications précédentes, **caractérisé en ce que** les points d'appui (12, 14) côté roue et côté structure sont constitués d'un métal, en particulier de l'acier, de l'aluminium ou du titane, ou d'une matière plastique renforcée par des fibres.
